# EUROPÄISCHE PATENTSCHRIFT

(11) **EP 1 294 995 B1**
(45) Veröffentlichungstag und Bekanntmachung des Hinweises auf die Patenterteilung: **15.04.2009**
(21) Anmeldenummer: 01929609.4
(22) Anmeldetag: 28.04.2001
(51) Int. Cl.: E04F 15/04

(54) **Fussbodensystem mit mehreren gleichen Fussbodenplatten**
Flooring system comprising a plurality of identical floorboards
Système de plancher comprenant un pluralité de planches de plancher identiques

(30) Priorität: 29.06.2000 DE 10031639
(43) Veröffentlichungstag der Anmeldung: 26.03.2003
(73) Patentinhaber: Witex Flooring Products GmbH, 32832 Augustdorf (DE)
(72) Erfinder: SCHNEIDER, Bernd, 32791 Lage/Billinghausen (DE)
(74) Vertreter: Steinmeister, Helmut
(86) Internationale Anmeldenummer: PCT/EP2001/004811
(87) Internationale Veröffentlichungsnummer: WO 2002/001018

(56) Entgegenhaltungen:
- DE-A- 3 343 601
- DE-A- 19 854 475
- DE-U- 20 002 413

## Beschreibung

Die Erfindung betrifft ein Fussbodensystem mit mehreren gleichen Fussbodenplatten, insbesondere Laminat-Paneelen, Parkettelementen, Furnierboden-Elementen, Fertigparkett-Elementen oder dergleichen, mit einem Randprofil an wenigstens zwei gegenüberliegenden Rändern jeder Platte in der Form einer modifizierten Nut-Feder-Verbindung.

Bei einer bekannten, derartigen Platte gemäß der DE 33 43 601 C2 ergibt sich beim Verbinden von zwei gleichen Platten insofern eine "modifizierte" Nut-Feder-Verbindung, als benachbarte Platten durch die Verbindung nicht nur in Vertikalrichtung in bezug zueinander festgelegt sind, sondern auch in Horizontalrichtung, sich also nicht unbeabsichtigt trennen können. Diese horizontale Festlegung läßt sich zwar auch durch Verleimen benachbarter Platten mit einfacher Nut-Feder-Verbindung herstellen, jedoch erfordert das Verleimen erheblich mehr Aufwand beim Verlegen, und Verbindungen dieser Art sind oft auch nicht ausreichend dauerhaft.

Bevorzugt werden daher in der Praxis Randprofil, die eine formschlüssige Verbindung benachbarter Platten auch in horizontaler Richtung gewährleisten.

Derartige formschlüssige Verbindungen zeigen beispielsweise neben der eingangs genannten Druckschrift auch die GB 2 256 023 A, die WO 98/58142. die US 4 426 820, die DE-OS 2 238 660, die DE 79 28 703 U1 oder die DE 198 54 475 A1.

Die in der DE 33 43 601 C2 beschriebene Fußbodenplatte verfügt im übrigen auch insoweit über eine Besonderheit, als an beiden zu verbindenden Rändern sowohl eine Feder als auch eine Nut vorgesehen sind. Die Randprofile werden durch mit dem Trägermaterial der Fußbodenplatte Verbuntene Extrusionsprofile gebildet.

Der Erfindung liegt die Aufgabe zugrunde, ein Fußbodensystem zu schaffen, die bei relativ einfacher Herstellbarkeit und Montierbarkeit eine sichere Verriegelung insbesondere in horizontaler Richtung gewährleistet.

Zur Lösung der gestellten Aufgabe sieht die Erfindung ein Fußbodensystem mit mehreren gleichen Fussbodenplatten, insbesondere Laminat-Paneelen, Parkettelementen oder dergleichen vor, mit einem Randprofil an wenigstens zwei gegenüberliegenden Rändern jeder Platte, das unmittelbar in das Trägermaterial der Platte eingearbeitet ist, in der Form einer modifizierten Nut-Feder-Verbindung zur Verbindung benachbarter Platten, mit einer gleichzeitigen Anordnung aus jeweils einer Nut und einer Feder an den wenigstens zwei Rändern, von denen die Feder an einem Rand einer ersten Platte und die Nut an einem zugeordneten Rand einer zweiten Platte von der Plattenunterseite her schräg aufsteigt, wobei die Nut der ersten Platte unmittelbar über deren Feder liegt, derart, daß die untere Wand dieser Nut entsprechend dem ansteigenden Verlauf der Feder der ersten Platte zum Nutboden hin schräg absinkt, und wobei die obere Wand der Nut der ersten Platte im wesentlichen parallel zur Plattenebene verläuft und die Feder der zweiten Platte sich unmittelbar über deren Nut befindet und entsprechend der Form der Nut der ersten Platte eine obere Oberfläche, die im wesentlichen parallel zur Plattenebene verläuft, und eine untere Oberfläche aufweist, die vom Boden der Nut der zweien. Platte zum Ende der Feder hin entsprechend dem Verlauf der unteren Wand der Nut der ersten Platte absinkt und wobei die Feder der zweiten Platte auf der oberen Seite eine vorspringende, in Längsrichtung der Feder verlaufende Verriegelungsrippe aufweist und in der Nut der ersten Platte in der oberen Innenfläche eine entsprechende Verriegelungsnut vorgesehen ist.

Zu der hier verwendeten Terminologie ist anzumerken, daß durchgängig von einer Lage der Platten ausgegangen wird, wie sie auch in den später erläuterten Zeichnung gezeigt ist. In diesem Sinne sind insbesondere die Ausdrücke "oben" und "unten" zu verstehen.

Ein Fussbodensystem der vorliegenden Art bestehet im allgemeinen aus Holzwerkstoffen, insbesondere MDF oder HDF, aber auch aus Massivholz. In Betracht kommen auch Trägerplatten aus synthetisch hergestellten Materialien oder Recyclingmaterialien, wie beispielsweise Polyurethan-Recyclingmaterialien. Hinsichtlich des verwendeten Materials ist die Anwendbarkeit der vorliegenden Erfindung nicht beschränkt.

Das Ausmaß der Hinterschneidung, das sich durch das Zusammenwirken der Feder der ersten Platte und der Nut der zweiten Platte ergibt, hängt im Einzelfall auch von der Elastizität des Materiales ab. Die Hinterschneidung kann bestimmt werden durch Auswahl der Steigung und der Länge der Feder der ersten Platte. Im allgemeinen wird ein Steigungswinkel von 15° zweckmäßig sein.

Zur Erleichterung des Zusammenfügens sind im übrigen vorzugsweise die Kanten am vorderen Ende der Federn und die Ränder am Eintritt der Nuten abgeschrägt.

Erfindungsgemäß befindet sich die Feder der zweiten Platte unmittelbar über deren Nut. Die Feder der zweiten Platte bildet also die obere Begrenzung der Nut der zweiten Platte. Die untere Oberfläche der Feder der zweiten Platte weist daher die Neigung der Feder der ersten Platte auf. Während die Feder der ersten Platte zwei im wesentlichen parallele, beispielsweise unter 15° ansteigende obere und untere Oberflächen besitzt, ist bei der Feder der zweiten Platte die untere Oberfläche zwar, wie erwähnt, zum freien Ende hin abwärts geneigt, die obere Oberfläche dagegen im wesentlichen waagerecht, also parallel zu der Plattenebene der zu verbindenden Platten. Vorzugsweise sind auch die vorauslaufenden Kanten an der oberen und unteren Seite der Feder der zweiten Platte abgeschrägt. Dabei bildet die untere Kante zugleich den oberen Rand der Nut der zweiten Platte.

Für eine besonders zuverlässige Verriegelungsvorrichtung der zuvor geschilderten Randverbindung ist erfindungsgemäß eine zusätzliche Verriegelungsrippe vorgesehen, die mit einer Verriegelungsnut an der anderen Platte zusammenwirkt. Genauer gesagt befindet sich die Verriegelungsrippe auf der oberen Oberfläche der Feder der zweiten Platte, und die entsprechende Verriegelungsnut befindet sich in der oberen Wand der Nut der ersten Platte.

Der senkrechte Querschnitt der Verriegelungsrippe und Verriegelungsnut ist vorzugsweise trapezförmig oder trapezförmig ausgerundet ausgebildet und besitzt daher mehr oder weniger geneigte Flanken. Steilere oder sogar senkrechte Flanken führen zu größerer Festigkeit, erschweren jedoch die Montage und Demontage.

Weitere Merkmale und Vorteile der Erfindung ergeben sich aus den Unteransprüche. Im folgenden werden bevorzugte Ausführungsbeispiele der Erfindung anhang der beigefügten Zeichnung näher erläutert.
- Fig. 1: zeigt in einem schematischen Schnitt die benachbarten Ränder von zwei zu verbindenden Platten:
- Fig. 2: veranschaulicht in einer entsprechenden Darstellung einen ersten Schritt beim Verbinden der Platten: und
- Fig. 3: ist eine entsprechende Darstellung und zeigt die Platten in der verbundenen Endstellung.

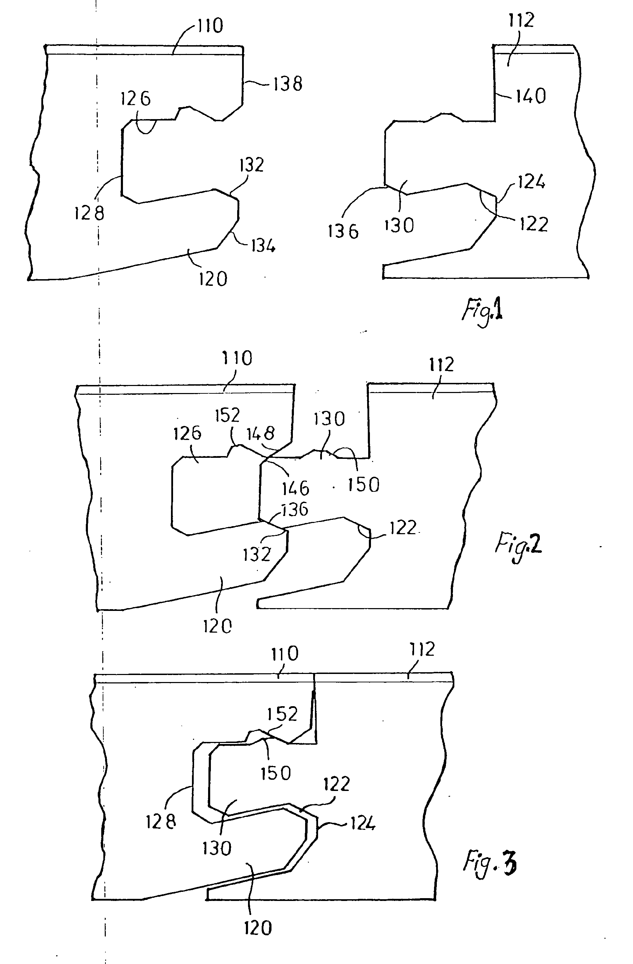

Fig. 1 bis 3 zeigen die Ränder von zwei zu verbindenden Fußbodenplatten, deren linke im folgenden als erste Platte 110 und deren rechte als zweite Platte 112 bezeichnet werden soll. Die Platten 110.112 können aus einem Laminat aus einem Holzwerkstoff und/oder Kunststoff, aber auch aus Massivholz bestehen. Gezeigt ist hier als Beispiel eine obere Deckschicht 114.116. Die links in Fig. 1 gezeigte erste Platte 110 weist eine von der unteren Oberfläche 118 der ersten Platten ansteigende Feder 120 auf, die mit einer Nut 122 in der zweiten Platte 12 zusammenwirkt, die entsprechend dem Anstieg der Feder 120 in das Innere der Nut 122 hinein, also zum Nutboden 124 ansteigt.

Oberhalb der schräg ansteigenden Feder 120 befindet sich in der ersten Platte eine Nut 126, deren untere Wand, die durch die obere Oberfläche der Feder 120 gebildet wird, zum Nutboden 128 hin abfällt. Die obere Wand der Nut 126 verläuft dagegen im wesentlichen waagerecht, also parallel zur Plattenebene der beiden Platten 110,112.

Die Nut 122 der zweiten Platte 112 wird nach oben begrenzt durch eine schräg zum Nutboden 124 hin ansteigende Wand, die die untere Oberfläche einer Feder 130 der zweiten Platte 112 bildet. Diese Feder 130 besitzt andererseits entsprechend der Querschnittsform der Nut 126 in der ersten Platte eine im wesentlichen waagerechte, parallel zur Plattenebene verlaufende obere Oberfläche.

Die Feder 120 der ersten Platte 110 weist an ihrem Ende an der oberen und unteren Kante jeweils eine Abschrägung 132,134 auf, die das Einschieben in die Nut 122 erleichtern. Diese Nut 122 besitzt an ihrem oberen Rand ebenfalls eine Abschrägung 136, die zugleich die untere Kante der Feder 130 bildet.

Oberhalb der Nut 126 der ersten Platte 110 und der Feder 130 der zweiten Platte 112 befinden sich jeweils senkrechte Stirnflächen 138,140, die beim Verlegen zusammentreffen und die Lage der Platten bestimmen. Die Nut 122 der zweiten Platte 112 ist nach unten begrenzt durch eine Lippe 142, deren obere Oberfläche durch die Wand der Nut 122 gebildet wird und die nach unten begrenzt wird durch die untere Oberfläche 144 der zweiten Platte 112.

Fig. 2 und 3 veranschaulichen drei aufeinanderfolgende Schritte beim Verlegen der erfindungsgemäßen Bodenplatten.

Gemäß Fig. 2 treffen zunächst die Abschrägung 132 an der oberen Kante der Feder 120 und die Abschrägung 136 an der unteren Kante der Feder 130 der zweiten Platte 112, die zugleich den oberen Rand der Nut 122 bildet, zusammen. Dabei wird bei ausreichend elastischem Material die Feder 120 der ersten Platte 110 leicht nach unten gebogen und gegebenenfalls die Feder 130 der zweiten Platte leicht angehoben. Wenn das Material der Platten 110,112 weniger elastisch ist, wird die zweite Platte 112 leicht abgehoben, wie dies in Fig. 3 gezeigt ist.

In diesem Falle trifft die obere Kante der Feder 130 in der zweiten Platte 112, die mit einer Abschrägung 146 versehen ist, gegen den oberen Rand der Nut 126, an dem sich ebenfalls eine Abschrägung 148 befindet.

Trotz dieser zusammenwirkenden Abschrägungen 146,148 besitzt die Feder 130 in bezug auf den Einlaß der Nut 126 ein leichtes Übermaß, das beim Zusammenschieben durch elastische Verformung überwinden werden muß, damit die Platten in die Stellung gemäß Fig. 3 gelangen können. In der in Fig. 3 gezeigten Stellung wird die Endposition der beiden Platten 110,112 bestimmt durch den oberen Bereich der beiden Stirnflächen 138,140. Die Federn 120,130 gelangen dagegen nicht gegen den jeweiligen Nutboden 24,28, so daß sicher ausgeschlossen ist, daß sich an der oberen Oberfläche der Platten 110,112 eine offene Fuge bildet.

Die Feder 120 der ersten Platte steigt schräg an, beispielsweise mit einem Winkel von 15°, und die Nut 122 der zweiten Platte 112 verläuft entsprechend schräg aufwärts zum Nutboden 124. Daraus ergibt sich, daß die Nut 126 der ersten Platte 110 auf ihrer unteren Seite zum Nutboden 128 hin abfällt, während die zugehörige Feder 130 der zweiten Platten 112 zu ihrem freien Ende hin, d. h. nach links in Fig. 1 schräg abwärts verläuft.

Abschrägungen sind an den äußeren Kanten der Federn 120,130 sowie an den äußeren Rändern der Nuten 126,122 vorgesehen.

Beim Zusammenschieben der beiden Platten 110,112 treffen die Abschrägungen 146,148 an der oberen Kante der Feder 130 und am oberen Rand der Nut 126 zusammen, so daß eine gewisse Verformung der beteiligten Teile notwendig ist. Wenig später treffen beim Zusammenschieben die Abschrägungen 132,136 an der oberen Kante der Feder 120 und der unteren Kante der Feder 130 zusammen, wie es in Fig. 2 erkennbar ist.

Auf der oberen Oberfläche der Feder 130 der zweiten Platte 112 ist eine in Längsrichtung der Feder 130 verlaufende Verriegelungsrippe 150 vorgesehen, der eine Verriegelungsnut 152 in der oberen Wand der Nut 126 der ersten Platte 110 entspricht. Die Verriegelungsrippe 150 weist einen abgeflacht-trapezförmigen oder ausgerundet-trapezförmigen Querschnitt auf, besitzt also flach ansteigende Flanken auf beiden Seiten, so dass der Einschub in die Nut 126 - und bei der Trennung der Platten aus der Verriegelungsnut 152 heraus - erleichtert wird.

In der Endstellung gemäß Fig. 3 bestimmt wiederum der obere Bereich der Stirnflächen 138.140 die Endposition. Die Verriegelung wird gewährleistet zum einen durch das Zusammenwirken der Verriegelungsrippe 150 mit der Verriegelungsnut 152 und zum anderen durch die zusammenwirkenden Schrägflächen der Feder 120 der ersten Platte 110 und der Feder 130 der zweiten Platte 112.

## Patentansprüche

1. Fussbodensystem mit mehreren gleichen Fussbodenplatten, insbesondere Laminat-Paneelen. Parkettelementen. Furnierboden-Elementen. Fertigparkett-Elementen oder dergleichen, mit einem Randprofil an wenigstens zwei gegenüberliegenden Rändern jeder Platte, in der Form einer modifizierten Nut-Feder-Verbindung zur Verbindung benachbarter Platten, mit gleichzeitiger Anordnung aus jeweils einer Nut (122,126) und einer Feder (120,130) an den wenigstens zwei Rändern, von denen die Feder an einem Rand einer ersten Platte und die Nut an einem Zuordnerrand einer zweiten Platte von der Plattenunterseite her schräg aufsteigen, wobei die Nut (126) der ersten Platte unmittelbar über deren Feder (120) liegt, derart, dass die untere Wand dieser Nut entsprechend dem ansteigenden Verlauf der Feder (120) der ersten Platte zum Nutboden (128) hin schräg absinkt, und wobei die obere Wand der Nut (126) der ersten Platte (110) im wesentlichen parallel zur Plattenebene verläuft und die Feder (130) der zweiten Platte (112) sich unmittelbar über deren Nut (122) befindet und entsprechend der Form der Nut (126) der ersten Platte eine obere Oberfläche, die im wesentlichen parallel zur Plattenebene verläuft, und eine untere Oberfläche aufweist, die vom Boden (124) der Nut (122) der zweiten Platte (112) zum Ende der Feder (130) hin entsprechend dem Verlauf der unteren Wand der Nut (126) der ersten Platte absinkt, **dadurch gekennzeichnet, dass** die Randprofile unmittelbar in das Trägermaterial der Fussbodenplatten eingearbeitet sind und dass die Feder (130) der zweiten Platte (112) auf der oberen Seite eine vorspringende, in Längsrichtung der Feder verlaufende Verriegelungsrippe (150) aufweist und in der Nut (126) der ersten Platte (110) in der oberen Innenfläche eine entsprechende Verriegelungsnut (152) vorgesehen ist.

2. Fussbodensystem nach Anspruch 1, **dadurch gekennzeichnet, dass** die montierte Position zwischen zwei benachbarten Platten bestimmt wird durch im wesentlichen senkrechte Stirnflächen der beiden Platten oberhalb der Feder (130) der zweiten Platte und der Nut (126) der ersten Platte.

3. Fussbodensystem nach einem der Ansprüche 1 oder 2, **dadurch gekennzeichnet, dass** die Federn (120, 130) der Platten (110. 112) an ihren oberen und unteren Kanten Abschrägungen (132, 136, 146) aufweisen.

4. Fussbodensystem nach einem der Ansprüche 1, bis 3, **dadurch gekennzeichnet, dass** die Nuten (122,126) an ihren oberen und unteren Rändern Abschrägungen (1.36,148) aufweisen.

5. Fussbodensystem nach einem der vorgehenden Ansprüche, **dadurch gekennzeichnet, dass** die Feder (120) der ersten Platte (110) und die Nut (122) der zweiten Platte (112) um ca. 155° aufwärts geneigt sind.

6. Fussbodensystem nach einem der Anspruche 1 bis 5, **dadurch gekennzeichnet, dass** die Feder (120) der ersten Platte (110) im wesentlichen in der Ebene der Stirnfläche (138) der ersten Platte endet und dass der Nutboden (124) der Nut (122) der zweiten Platte (112) im wesentlichen in der Ebene der Stirnfläche (140) der zweiten Platte liegt.

7. Fussbodensystem nach einem der vorhergehenden Ansprüche, **dadurch gekennzeichnet, dass** die Verriegelungsrippe (150) im senkrechten Querschnitt trapezförmig oder trapezförmig-ausgerundet mit geneigten Flanken an beiden Seiten ausgebildet ist.

8. Fussbodensystem nach einem der vorhergehenden Ansprüche, **dadurch gekennzeichnet, dass** die Verriegelungsnut (152) im senkrechten Schnitt trapezförmig bis trapezförmig-ausgerundet mit geneigten Flanken an beiden Seiten ausgebildet ist.

9. Fussbodensystem nach Anspruch 8. **dadurch gekennzeichnet, dass** die Flanke der Verriegelungsnut (152) auf der dem Nutboden (128) zugewandten Seite steiler als die der Aussenseite der zugewandte Flanke ist.

## Claims

1. Flooring system having a plurality of identical floor boards, in particular laminate panels, parquet elements, veneer flooring elements, ready-made parquet elements or the like, having an edge profile on at least two opposing edges of each board in the form of a modified tongue and groove connection for connecting adjacent boards, with simultaneous arrangement comprising in each case a groove (122, 126) and a tongue (120, 130) on the at least two edges of which the tongue protrudes obliquely upwards from the lower side of the board at one edge of a first board and the groove protrudes obliquely upwards from the lower side of the board at an associating edge of a second board, the groove (126) of the first board being located directly above the tongue (120) thereof in such a manner that the lower wall of this groove is inclined in a downward direction towards the groove base (128) in accordance with the ascending path of the tongue (120) of the first board, and the upper wall of the groove (126) of the first board (110) extending substantially parallel with the board plane and the tongue (130) of the second board (112) being located directly above the groove (122) thereof and, in accordance with the shape of the groove (126) of the first board, having an upper surface which extends substantially parallel with the board plane and a lower surface which extends downwards from the base (124) of the groove (122) of the second board (112) towards the end of the tongue (130) in accordance with the path of the lower wall of the groove (126) of the first board, **characterised in that** the edge profiles are incorporated directly into the carrier material of the floor boards and **in that** the tongue (130) of the second board (112) has, at the upper side, a protruding locking rib (150) which extends in the longitudinal direction of the tongue and, in the groove (126) of the first board (110), a corresponding locking groove (152) is provided in the upper inner face.

2. Flooring system according to claim 1, **characterised in that** the assembled position between two adjacent boards is determined by means of substantially perpendicular end faces of the two boards above the tongue (130) of the second board and the groove (126) of the first board.

3. Flooring system according to either claim 1 or claim 2, **characterised in that** the tongues (120, 130) of the boards (110, 112) have chamfered portions (132, 136, 146) at the upper and lower edges thereof.

4. Flooring system according to any one of claims 1 to 3, **characterised in that** the grooves (122, 126) have chamfered portions (136, 148) at the upper and lower edges thereof.

5. Flooring system according to any one of the preceding claims, **characterised in that** the tongue (120) of the first board (110) and the groove (122) of the second board (112) are inclined in an upward direction through approximately 15°.

6. Flooring system according to any one of claims 1 to 5, **characterised in that** the tongue (120) of the first board (110) terminates substantially in the plane of the end face (138) of the first board and **in that** the groove base (124) of the groove (122) of the second board (112) is located substantially in the plane of the end face (140) of the second board.

7. Flooring system according to any one of the preceding claims, **characterised in that** the locking rib (150) is constructed so as to have a vertical cross-section which is trapezoidal or rounded in a trapezoidal manner with inclined flanks at both sides.

8. Flooring system according to any one of the preceding claims, **characterised in that** the locking groove (152) is constructed so as to have a vertical cross-section which is trapezoidal to rounded in a trapezoidal manner with inclined flanks at both sides.

9. Flooring system according to claim 8, **characterised in that** the flank of the locking groove (152) at the side nearer the groove base (128) is more steep than the flank nearer the outer side.

## Revendications

1. Système de plancher avec plusieurs dalles de plancher identiques, en particulier des panneaux de stratifié, des éléments de parquet, des éléments de plancher en contreplaqué, des éléments de parquet finis ou similaires, avec un profilé de bordure sur au moins deux bords opposés de chaque dalle sous la forme d'une liaison modifiée à rainure et languette pour l'assemblage de dalles voisines, avec agencement simultané respectivement d'une rainure (122, 126) et d'une languette (120, 130) sur les au moins deux bords, desquels la languette sur un bord d'une première dalle et la rainure sur un bord associé d'une deuxième dalle montent obliquement depuis la face inférieure de la dalle, la rainure (126) de la première dalle se situant directement au-dessus de sa languette (120) de manière que la paroi inférieure de cette rainure s'abaisse obliquement vers le fond de rainure (128), conformément au parcours ascendant de la languette (120) de la première dalle, et la paroi supérieure de la rainure (126) de la première dalle (110) s'étendant sensiblement parallèlement au plan de la dalle, et la languette (130) de la deuxième dalle (112) se trouvant immédiatement au-dessus de sa rainure (122), et présentant, conformément à la forme de la rainure (126) de la première dalle, une surface supérieure qui s'étend sensiblement parallèlement au plan de la dalle, et une surface inférieure qui s'abaisse depuis le fond (124) de la rainure (122) de la deuxième dalle (112), vers l'extrémité de la languette (130), conformément au parcours de la paroi inférieure de la rainure (126) de la première dalle, **caractérisé en ce que** les profilés de bordure sont directement pratiqués dans le matériau de support des dalles de plancher, **en ce que** la languette (130) de la deuxième dalle (112) présente, sur la face supérieure, une nervure de verrouillage (150) saillante, s'étendant dans la direction longitudinale de la languette, et dans la rainure (126) de la première dalle (110) il est prévu une rainure de verrouillage (152) correspondante, dans la surface intérieure supérieure.

2. Système de plancher selon la revendication 1, **caractérisé en ce que** la position montée entre eux dalles voisines est déterminée par des surfaces frontales, sensiblement verticales, des deux dalles, au-dessus de la languette (130) de la deuxième dalle et de la rainure (126) de la première dalle.

3. Système de plancher selon l'une quelconque des revendications 1 ou 2, **caractérisé en ce que** les languettes (120, 130) des dalles (110, 112) présentent des chanfreins (132, 136, 146) sur leurs arêtes supérieures et inférieures.

4. Système de plancher selon l'une quelconque des revendications 1 à 3, **caractérisé en ce que** les rainures (122, 126) présentent des chanfreins (136, 148) sur leurs bords supérieurs et inférieurs.

5. Système de plancher selon l'une quelconque des revendications 1 à 4, **caractérisé en ce que** la languette (120) de la première dalle (110) et la rainure (122) de la deuxième dalle (112) sont inclinées vers le haut d'environ 15°.

6. Système de plancher selon l'une quelconque des revendications 1 à 5, **caractérisé en ce que** la languette (120) de la première dalle (110) se termine sensiblement dans le plan de la surface frontale (138) de la première dalle et **en ce que** le fond de rainure (124) de la rainure (122) de la deuxième dalle (112) se situe sensiblement dans le plan de la surface frontale (140) de la deuxième dalle.

7. Système de plancher selon l'une quelconque des revendications 1 à 6, **caractérisé en ce que** la nervure de verrouillage (150) présente, en coupe verticale, la forme d'un trapèze ou d'un trapèze arrondi avec des flancs inclinés sur les deux côtés.

8. Système de plancher selon l'une quelconque des revendications 1 à 7, **caractérisé en ce que** la rainure de verrouillage (152), en coupe verticale, présente la forme d'un trapèze ou d'un trapèze arrondi avec des flancs inclinés sur les deux côtés.

9. Système de plancher selon la revendication 8, **caractérisé en ce que** le flanc de la rainure de verrouillage (152) est plus raide sur le côté tourné vers le fond de rainure (128) que le flanc tourné vers le côté extérieur.
